# EUROPEAN PATENT APPLICATION

(11) **EP 4 819 248 A1**
(43) Date of publication of application: **07.10.2026**
(21) Application number: 24913759.7
(22) Date of filing: 30.12.2024
(51) Int. Cl.: H01M 4/62, H01M 4/13, H01M 4/139, H01M 4/04, H01M 10/052, H01M 4/02

(54) **ELECTRODE, SECONDARY BATTERY COMPRISING SAME, AND METHOD FOR MANUFACTURING SAME**

(30) Priority: 29.12.2023 KR 20230197939; 29.12.2023 KR 20230197940
(71) Applicant: LG Energy Solution, Ltd., Seoul 07335 (KR)
(72) Inventor: KWAK, Sang-Min, Daejeon 34122 (KR); YOON, Kyung-Hwan, Daejeon 34122 (KR); LEE, Ki-Seok, Daejeon 34122 (KR); LEE, Ho-Chan, Daejeon 34122 (KR); SONG, Jung-Woo, Daejeon 34122 (KR); SHIN, Dong-Mok, Daejeon 34122 (KR); LEE, Nam-Jeong, Daejeon 34122 (KR); KANG, Seong-Wook, Daejeon 34122 (KR); OH, Sol-Seon, Daejeon 34122 (KR); HAN, Seung-Hee, Daejeon 34122 (KR)
(74) Representative: Goddar, Heinz J.
(86) International application number: PCT/KR2024/021493
(87) International publication number: WO 2025/143955

(57) **Abstract**

There are provided an electrode including an electrode current collector; and an electrode layer present on the electrode current collector and including an active material, a conductive material and a binder, wherein the binder includes a fluorinated polymer and a modified polyolefin, wherein the electrode has 5 or less heterocolored regions per m² on a surface, wherein the modified polyolefin includes at least one functional group of a carboxylic acid anhydride-derived functional group and a carboxylic acid-derived functional group, and wherein a breaking strength per unit width of the electrode layer is 0.6 N/cm or more, a secondary battery including the same and an energy storage system.

## Description

### TECHNICAL FIELD

The present disclosure relates to an electrode, a secondary battery including the same and a method for manufacturing the same, and more particularly, to an electrode with improved appearance characteristics and mechanical properties, a secondary battery including the same and a method for manufacturing the same.

This application is based on and claims priority from Korean Patent Application Nos. 10-2023-0197939 and 10-2023-0197940 filed on December 29, 2023 in the Republic of Korea, the disclosures of which are incorporated herein by reference.

### BACKGROUND

Due to the increasing use of fossil fuels, there is a growing demand for the use of alternative energy and clean energy, and in these circumstances, many studies are being made in the field of energy generation and storage using electrochemistry. Currently, a typical example of electrochemical devices using electrical and chemical energy is secondary batteries, and the range of application of secondary batteries is gradually expanding. One of the most common types of secondary batteries, lithium secondary batteries, are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium secondary batteries is expanding to auxiliary power sources through grids.

A process of manufacturing a lithium secondary battery is largely classified into three steps; an electrode manufacturing process, an electrode assembly manufacturing process and a formation/activation process. The electrode manufacturing process is subclassified into an electrode mixture mixing process, an electrode coating process, a drying process, a rolling process, a slitting process and a winding process.

Among them, the electrode mixture mixing process is a process of mixing the components for forming an electrode active layer in which electrochemical reaction actually occurs in the electrode, and specifically, mixing the essential element of the electrode, an electrode active material with an additive such as a conductive material, a filler, a binder for holding powders together and adhering to a current collector, and a solvent for imparting viscosity and dispersing the powders to prepare a flowable slurry.

The electrode coating process of applying the slurry to the electrically conductive current collector, and the drying process for removing the solvent contained in the electrode mixture slurry are performed, and additionally the electrode is compressed to a predetermined thickness.

Meanwhile, as the solvent contained in the electrode mixture evaporates in the drying process, defects such as pin holes or cracks may occur in the already formed electrode active layer. Additionally, the active layer is not uniformly dried all over the entire inner/outer area, and due to a difference in solvent evaporation rate, some regions get dry earlier and the powder at the corresponding regions floats, and some other regions get dry later at a time interval, resulting in low quality of the electrode.

To solve these problems, efforts have been devoted to dryers for evenly drying the inner and outer area of the active layer and adjusting the solvent evaporation rate, but these dryers are very expensive and require a considerate amount of costs and time to operate them, so it is disadvantageous in terms of manufacturing process.

Accordingly, many studies are being made to manufacture dry electrodes that do not use solvents in recent years.

A dry electrode is generally manufactured by laminating a free-standing film including an active material, a binder and a conductive material onto a current collector.

The process of manufacturing the dry electrode includes mixing the active material, the conductive material, for example, a carbon material, and the binder that can be fibrillated together using a blender, fibrillating the binder through a high-shear mixing process such as jet-milling and calendering the mixture into a film shape to make the free-standing film. Subsequently, the free-standing film made after the calendering is laminated onto the current collector.

When the process of manufacturing the dry electrode uses the primer-coated current collector to ensure adhesion strength in the lamination process of the dry film and the current collector, additional costs are incurred.

Therefore, there is an urgent need for development of dry electrode manufacturing technology that can solve these problems.

### DISCLOSURE

### Technical Problem

The present disclosure is designed to solve the above-described problems and therefore the present disclosure is directed to providing an electrode with improved appearance characteristics and mechanical properties as well as improved electrode adhesion strength, a secondary battery including the same and a method for manufacturing the same.

### Technical Solution

To solve the above-described problem, according to an aspect of the present disclosure, there is provided an electrode of the following embodiments.

According to a first embodiment,
the electrode includes an electrode current collector; and an electrode layer present on the electrode current collector and including an active material, a conductive material and a binder,
wherein the binder includes a fluorinated polymer and a modified polyolefin,
wherein the electrode has 5 or less heterocolored regions per m² on a surface,
wherein the modified polyolefin includes at least one functional group of a carboxylic acid anhydride-derived functional group and a carboxylic acid-derived functional group, and
wherein a breaking strength per unit width of the electrode layer is 0.6 N/cm or more.

According to a second embodiment, in the first embodiment,
the electrode may have 0 to 3 heterocolored regions per m² on the surface.

According to a third embodiment, in the first or second embodiment,
the breaking strength per unit width of the electrode layer may range from 0.6 N/cm to 3 N/cm.

According to a fourth embodiment, in any one of the first to third embodiments,
the modified polyolefin may be derived from modified polyolefin particles having an average particle size of 0.5 mm or less.

According to a fifth embodiment, in any one of the first to fourth embodiments,
an amount of the modified polyolefin may range from 2 parts by weight to 40 parts by weight based on 100 parts by weight of the binder.

According to a sixth embodiment, in any one of the first to fifth embodiments,
a melting point of the modified polyolefin may be 140°C or less.

According to a seventh embodiment, in any one of the first to sixth embodiments,
the modified polyolefin may include at least one of a modified polyethylene and a modified polypropylene.

According to an eighth embodiment, in any one of the first to seventh embodiments,
the olefin may include at least one of an ethylene and a propylene, and
the at least one functional group of the carboxylic acid anhydride-derived functional group and the carboxylic acid-derived functional group may be derived from maleic acid anhydride, glutaric acid anhydride, phthalic acid anhydride, trimellitic acid anhydride, pyromellitic acid monoanhydride, pyromellitic acid dianhydride, 1,8-naphthalenedicarboxylic acid anhydride, 2,3-naphthalenedicarboxylic acid anhydride, 1,4,5,8-naphthalenetetracarboxylic acid monoanhydride, 1,4,5,8-naphthalenetetracarboxylic acid dianhydride, 2,3,6,7-naphthalenetetracarboxylic acid monoanhydride, 2,3,6,7-naphthalenetetracarboxylic acid dianhydride, maleic acid, glutaric acid, phthalic acid, trimellitic acid, pyromellitic acid, 1,8-naphthalenedicarboxylic acid, 2,3-naphthalenedicarboxylic acid, 1,4,5,8-naphthalenetetracarboxylic acid, 2,3,6,7-naphthalenetetracarboxylic acid, or two or more of them.

According to a ninth embodiment, in any one of the first to eighth embodiments,
the modified polyolefin may be a modified polyethylene.

According to a tenth embodiment, in any one of the first to ninth embodiments,
the modified polyolefin may be at least one of a polyethylene including the maleic acid anhydride-derived functional group and a polypropylene including the maleic acid anhydride-derived functional group.

According to an eleventh embodiment, in any one of the first to tenth embodiments,
an amount of the at least one functional group of the carboxylic acid anhydride-derived functional group and the carboxylic acid-derived functional group in the modified polyolefin may range from 0.5 mol% to 20 mol%.

According to a twelfth embodiment, in any one of the first to eleventh embodiments,
the binder may be fibrillated to bind the active material and the conductive material.

According to a thirteenth embodiment, in any one of the first to twelfth embodiments,
the binder may include a polytetrafluoroethylene (PTFE).

According to a fourteenth embodiment, in any one of the first to thirteenth embodiments,
an amount of the active material may range from 80 parts by weight to 98 parts by weight, an amount of the conductive material may range from 0.5 parts by weight to 10 parts by weight, an amount of the fluorinated polymer may range from 0.5 parts by weight to 5 parts by weight, and an amount of the modified polyolefin may range from 0.02 parts by weight to 3.3 parts by weight.

According to a fifteenth embodiment, in any one of the first to fourteenth embodiments,
the electrode current collector may not include a conductive primer layer on at least one surface.

According to a sixteenth embodiment, in any one of the first to fifteenth embodiments,
the electrode layer may be derived from a dry electrode film.

According to a seventeenth embodiment,
there is provided a method for manufacturing the electrode of any one of the first to sixteenth embodiments, including: preparing a mixture including an active material, a conductive material and a binder, wherein the binder includes a fluorinated polymer and a modified polyolefin;
kneading the mixture in a range between 70°C and 170°C under higher pressure than normal pressure to produce a mixture lump;
grinding the mixture lump to obtain an electrode mixture powder;
feeding the electrode mixture powder between a plurality of rolls to perform calendering to form an electrode film; and
laminating the electrode film onto a metal current collector.

According to an eighteenth embodiment, in the seventeenth embodiment,
the modified polyolefin may have an average particle size of 0.5 mm or less.

According to a nineteenth embodiment, in the seventeenth or eighteenth embodiment,
the step of kneading to produce the mixture lump may be performed in a kneader under the higher pressure than the normal pressure.

According to a twentieth embodiment,
there is provided a secondary battery including a positive electrode, a negative electrode and a separator present between the positive electrode and the negative electrode, wherein at least one of the positive electrode and the negative electrode is the electrode in any one of the first to sixteenth embodiments.

According to a twenty first embodiment,
there is provided an energy storage system including the secondary battery according to the twentieth embodiment as a unit cell.

### Advantageous Effects

According to an embodiment of the present disclosure, in addition to the fluorinated polymer as the binder, the dry electrode film further includes the modified polyolefin including at least one functional group of carboxylic acid anhydride-derived functional group and carboxylic acid-derived functional group, the average particle size of the modified polyolefin is controlled below the predetermined range, the melting point of the modified polyolefin is controlled below the predetermined range, and the kneading temperature in the kneading process in the manufacture of the electrode is adjusted to the melting point of the modified polyolefin, to sufficiently melt the modified polyolefin in the kneading process so as to maximize the dispersion in the electrode materials, thereby increasing the mechanical strength of the electrode, improving the appearance characteristics and ensuring the adhesion strength to the current collector having no primer coating, so the dry electrode that can be manufactured by the straightforward process and has high adhesion strength to the current collector may be provided.

### BRIEF DESCRIPTION OF THE DRAWINGS

The accompanying drawings illustrate exemplary embodiments of the present disclosure and together with the foregoing description, serve to provide a better understanding of the technical aspects of the present disclosure, and thus the present disclosure should not be construed as being limited to the accompanying drawings.
FIGS. 1a and 1b are diagrams of a process of manufacturing an electrode film of an electrode that is applied to an electrode assembly according to an embodiment of the present disclosure.
FIG. 2 is a diagram of an electrode lamination process according to an embodiment of the present disclosure.
FIG. 3 is a diagram of an electrode calendering process and a lamination process according to an embodiment of the present disclosure.
FIG. 4 is a diagram of an electrode calendering process and a lamination process according to an embodiment of the present disclosure.
FIG. 5 is a photographic image of a surface of an electrode of Example 1.
FIG. 6 is a photographic image of a surface of an electrode of Comparative Example 1.

### BEST MODE

Hereinafter, the present disclosure will be described in detail to help the understanding of the present disclosure.

The terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

The terms as used herein are used to describe the exemplary embodiments of the present disclosure but not intended to be limiting. The singular forms include the plural forms unless the context clearly indicates otherwise.

The terms "comprise", "include" and "have" when used in this specification, specify the presence of stated elements, but do not preclude the presence or addition of one or more other elements, unless the context clearly indicates otherwise.

According to an aspect of the present disclosure,
there is provided an electrode including: an electrode current collector; and an electrode layer present on the electrode current collector and including an active material, a conductive material and a binder,
the binder includes a fluorinated polymer and a modified polyolefin,
a surface of the electrode has 5 or less heterocolored regions per m²,
the modified polyolefin includes at least one functional group of carboxylic acid anhydride-derived functional group and carboxylic acid-derived functional group, and
the breaking strength per unit width of the electrode layer is 0.6 N/cm or more.

According to an embodiment of the present disclosure, the electrode may be a positive electrode or a negative electrode, and the active material may be a positive electrode active material or a negative electrode active material.

The positive electrode active material may include, for example, lithium transition metal oxides; lithium metal iron phosphates; lithium nickel-manganese-cobalt oxides; oxides in which parts of lithium nickel-manganese-cobalt oxides are replaced by other transition metals; or two or more of them, but is not limited thereto. Specifically, the positive electrode active material may include, for example, layered compounds such as lithium cobalt oxide (LiCoO₂) or lithium nickel oxide (LiNiO₂), or compounds with one or more transition metal substitution; lithium manganese oxides with the formula of Li₁₊ₓMn₂₋ₓO₄ (x is 0 to 0.33), LiMnO₃, LiMn₂O₃ or LiMnO_{2;} lithium copper oxides (Li₂CuO₂); vanadium oxides such as LiV₃O₈, LiV₃O₄, V₂O₅ or Cu₂V₂O_{7;} Ni-site type lithium nickel oxides represented by the chemical formula LiNi_{1- x}MₓO₂ (M = Co, Mn, Al, Cu, Fe, Mg, B or Ga, and x = 0.01 to 0.3); lithium manganese composite oxides represented by the chemical formula LiMn₂₋ₓMₓO₂ (M = Co, Ni, Fe, Cr, Zn or Ta, and x = 0.01 to 0.1) or Li₂Mn₃MO₈ (M = Fe, Co, Ni, Cu or Zn); lithium metal phosphates LiMPO₄ (M = Fe, CO, Ni or Mn); Lithium nickel-manganese-cobalt oxides Li₁₊ₓ(NiₐCo_{b}Mn_{c})₁₋ₓO₂ (x = 0 to 0.03, a = 0.3 to 0.95, b = 0.01 to 0.35, c = 0.01 to 0.5, a+b+c=1); oxides in which parts of lithium nickel-manganese-cobalt oxides are replaced by aluminum (lithium nickel-manganese-cobalt-aluminum oxide) Liₐ[Ni_{b}Co_{c}Mn_{d}Alₑ]_{1-f}M¹_{f}O₂ (M¹ is at least one selected from the group consisting of Zr, B, W, Mg, Ce, Hf, Ta, La, Ti, Sr, Ba, F, P and S, and 0.8≤a≤1.2, 0.5≤b≤0.99, 0<c<0.5, 0<d<0.5, 0.01≤e≤0.1, 0≤f≤0.1), disulfide compounds; or Fe₂(MoO₄)₃, but is not limited thereto. Specifically, the lithium nickel-manganese-cobalt-aluminum oxide may include Li[Ni_{0.88}Co_{0.07}Mn_{0.04}Al_{0.01}]O₂.

The negative electrode active material may include carbons such as non-graphitizing carbons and graphite-based carbons; metal composite oxides such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0 ≤x≤1; 1≤y≤3; 1≤z≤8); lithium metals; lithium alloys; silicon-based alloys; tin-based alloys; silicon oxides such as SiO, SiO/C or SiO₂; metal oxides such as SnO, SnO₂, PbO, PbO₂, Pb₂O₃, Pb₃O₄, Sb₂O₃, Sb₂O_{4,} Sb₂O₅, GeO, GeO₂, Bi₂O_{3,} Bi₂O₄ or Bi₂O₅; conductive polymers such as polyacetylene; Li-Co-Ni based materials.

According to an embodiment of the present disclosure, the electrode may be a positive electrode, and the active material may be, specifically, a positive electrode active material, and more specifically, may be lithium transition metal oxides, lithium nickel-manganese-cobalt oxides, oxides in which parts of lithium nickel-manganese-cobalt oxides are replaced by Al or another transition metal, or lithium iron phosphates.

The conductive material is not limited to a particular type and may include any material having conductive properties without causing any chemical change in the corresponding battery. For example, the conductive material may include any one of graphite such as natural graphite or artificial graphite; carbon-based materials such as carbon black, acetylene black, Ketjen black, channel black, furnace black, lamp black, thermal black or carbon fibers; metal powders or metal fibers such as copper, nickel, aluminum or silver; needle-shaped or branch-shaped conductive whiskers such as zinc oxide whiskers, calcium carbonate whiskers, titanium dioxide whiskers, silicon oxide whiskers, silicon carbide whiskers, aluminum borate whiskers, magnesium borate whiskers, potassium titanate whiskers, silicon nitride whiskers, silicon carbide whiskers or alumina whiskers; conductive metal oxides such as titanium oxide; or conductive polymers such as polyphenylene derivatives, or a mixture thereof. Specifically, to achieve uniform mixing and improve conductivity, the conductive material may include at least one selected from the group consisting of activated carbon, graphite, carbon black and carbon nanotubes, and more specifically, activated carbon.

The binder includes the fluorinated polymer and the modified polyolefin.

According to an embodiment of the present disclosure, the fluorinated polymer may include polymer having at least one fluorine group in the polymer, and specifically, polytetrafluoroethylene (PTFE); polyvinylidene fluoride (PVdF)-based copolymers such as PVdF or polyvinylidene fluoride-co-hexafluoropropylene (PVdF-HFP), or two or more of them. In particular, the fluorinated polymer may include polytetrafluoroethylene (PTFE). In addition, the fluorinated polymer may include polytetrafluoroethylene alone, or in addition to the polytetrafluoroethylene, the fluorinated polymer may further include at least one of PVdF-based copolymers such as polyvinylidene fluoride (PVdF) or polyvinylidene fluoride-co-hexafluoropropylene (PVdF-HFP).

According to an embodiment of the present disclosure, in addition to the fluorinated polymer and the modified polyolefin, the binder may further include a non-fluorinated polymer. The non-fluorinated polymer may include polyolefins or polyethylene oxides (PEO).

The modified polyolefin includes at least one functional group of carboxylic acid anhydride-derived functional group and carboxylic acid-derived functional group.

According to an embodiment of the present disclosure, the modified polyolefin may be copolymers including olefin-derived repeating unit, and at least one repeating unit of carboxylic acid anhydride-derived repeating unit and carboxylic acid-derived repeating unit; modified polyolefins including at least one functional group of carboxylic acid anhydride-derived functional group and carboxylic acid-derived functional group as a side chain functional group rather than a repeating unit; copolymers including olefin-derived repeating unit, and at least one repeating unit of carboxylic acid anhydride-derived repeating unit and carboxylic acid-derived repeating unit, and further including at least one functional group of carboxylic acid anhydride-derived functional group and carboxylic acid-derived functional group as a side chain functional group; or two or more of them.

When the modified polyolefin including at least one functional group of carboxylic acid anhydride-derived functional group and carboxylic acid-derived functional group is a copolymer including olefin-derived repeating unit, and at least one repeating unit of carboxylic acid anhydride-derived repeating unit and carboxylic acid-derived repeating unit, the copolymer may include block copolymers, random copolymers or alternating copolymers in which the olefin-derived repeating unit; and at least one repeating unit of carboxylic acid anhydride-derived repeating unit and carboxylic acid-derived repeating unit are all linked within the main chain. In addition, the modified polyolefin including at least one functional group of carboxylic acid anhydride-derived functional group and carboxylic acid-derived functional group may include graft copolymers including at least one repeating unit of carboxylic acid anhydride-derived repeating unit and carboxylic acid-derived repeating unit in the side chain of the polyolefin.

In addition, according to an embodiment of the present disclosure, when the modified polyolefin including at least one functional group of carboxylic acid anhydride-derived functional group and carboxylic acid-derived functional group is a modified polyolefin including said functional group as the side chain functional group, the modified polyolefin may include compounds in which at least one hydrogen of the polyolefin is replaced by at least one functional group of carboxylic acid anhydride-derived functional group and carboxylic acid-derived functional group.

The modified polyolefin may include at least one of modified polyethylene and modified polypropylene. The modified polyolefin may include modified polyethylene.

According to an embodiment of the present disclosure, the modified polyolefin may include polymer including the olefin-derived repeating unit, and in this instance, the olefin-derived repeating unit may be derived from olefin including at least one of ethylene and propylene.

According to an embodiment of the present disclosure, the modified polyolefin may further include an olefin elastomer-derived repeating unit, a styrene-derived repeating unit, an unsaturated hydrocarbon-derived repeating unit, or two or more of them.

The olefin elastomer-derived repeating unit may include repeating units derived from 1-butene or 1-octene.

The styrene-derived repeating unit may include repeating units derived from styrene or substituted styrene. The unsaturated hydrocarbon-derived repeating unit may include repeating units derived from 1,2-butadiene or 1,3-butadiene.

Specifically, the modified polyolefin may include poly(ethylene)-(1-butene) copolymers, poly(ethylene)-(1-octene) copolymers, poly(ethylene)-(1-propylene) copolymers or poly(ethylene)-(styrene)-(butadiene) copolymers including carboxylic acid anhydride-derived functional groups.

According to an embodiment of the present disclosure, at least one functional group of carboxylic acid anhydride-derived functional group and carboxylic acid-derived functional group may be derived from maleic acid anhydride, glutaric acid anhydride, phthalic acid anhydride, trimellitic acid anhydride, pyromellitic acid monoanhydride, pyromellitic acid dianhydride, 1,8-naphthalenedicarboxylic acid anhydride, 2,3-naphthalenedicarboxylic acid anhydride, 1,4,5,8-naphthalenetetracarboxylic acid monoanhydride, 1,4,5,8-naphthalenetetracarboxylic acid dianhydride, 2,3,6,7-naphthalenetetracarboxylic acid monoanhydride, 2,3,6,7-naphthalenetetracarboxylic acid dianhydride, maleic acid, glutaric acid, phthalic acid, trimellitic acid, pyromellitic acid, 1,8-naphthalenedicarboxylic acid, 2,3-naphthalenedicarboxylic acid, 1,4,5,8-naphthalenetetracarboxylic acid, 2,3,6,7-naphthalenetetracarboxylic acid, or two or more of them.

The modified polyolefin may include at least one of polyethylene including a maleic acid anhydride-derived functional group and polypropylene including a maleic acid anhydride-derived functional group.

According to an embodiment of the present disclosure, the modified polyolefin may include at least one functional group of carboxylic acid anhydride-derived functional group and carboxylic acid-derived functional group in an amount of from 0.5 mol% to 20 mol%, or from 0.5 mol% to 15 mol%. When the amount of at least one functional group of carboxylic acid anhydride-derived functional group and carboxylic acid-derived functional group in the modified polyolefin falls within the aforementioned range, due to high reactivity of at least one functional group of carboxylic acid anhydride-derived functional group and carboxylic acid-derived functional group, the modified polyolefin may have hydrophilicity, and the electrode layer including the modified polyolefin may have significantly improved adhesion strength at the surface of adhesion with the current collector (for example, a metal current collector).

In this instance, the amount (mol%) of at least one functional group of carboxylic acid anhydride-derived functional group and carboxylic acid-derived functional group in the modified polyolefin may be defined as the percent of the molar number of at least one functional group of carboxylic acid anhydride-derived functional group and carboxylic acid-derived functional group (including repeating units and side chain functional groups) to the total molar number of all the repeating units and functional groups included in the modified polyolefin (for example, at least one functional group of olefin-derived repeating unit, carboxylic acid anhydride-derived functional group and carboxylic acid-derived functional group (including repeating units and functional groups linked within side chains, not repeating units of the copolymers)).

In addition to the active material, the conductive material and the fluorinated polymer binder in the electrode layer, the electrode according to the present disclosure may further include the modified polyolefin as the binder having high adhesive properties with respect to the current collector, thereby improving the adhesion strength between the uncoated current collector and the electrode layer without a process of forming a primer layer on the current collector.

According to an embodiment of the present disclosure, the electrode layer may include the fibrillated binder to bind the active material and the conductive material, and the fibrillated binder is less likely to break than non-fibrillated binders and has high ability to stretch in the length direction, thereby improving the flexibility of the electrode layer and the electrode including the same. That is, the binder may be fibrillated to bind the active material and the conductive material. Specifically, the fluorinated polymer in the binder may be fibrillated to bind the active material and the conductive material together with the modified polyolefin, thereby improving the adhesion strength to the current collector. The fibrillation process of the binder will be described in the electrode manufacturing method below.

The surface of the electrode of the present disclosure has 5 or less heterocolored regions per m². According to an embodiment of the present disclosure, the surface of the electrode may have 0 to 5 heterocolored regions per m², or 0 to 3 heterocolored regions per m².

Here, the "heterocolored region" may refer to a region having a different color that is distinguished from the normal electrode surface near the heterocolored region, with a major axis length equal to or larger than a predetermined length.

Specifically, the heterocolored region may be defined as a region in which a gray value difference △GV between a gray value GV (heterocolored region GV) of the heterocolored region and a gray value GV (background GV) of the electrode surface around the heterocolored region is larger than 20, and the major axis length of the horizontal cross-section of the heterocolored region parallel to the electrode surface is equal to or larger than 1.5 mm.

The gray value difference △GV may be represented by the following equation.
$Gray value difference △ GV = \left|Background GV-Heterocolored region GV\right|$

According to an embodiment of the present disclosure, the gray value difference △GV may be measured by an inspection system equipped with a vision camera, a light-emitting diode (LED) light source and control analysis software. The system may determine the presence or absence of a surface defect by analyzing a reflection pattern of light irradiated onto the electrode layer surface from a specific direction, and when the surface has no defect, the reflection characteristics are uniform, and when the surface has a defect, the reflection characteristics change, and the change in reflection characteristics may be manifested as the gray value difference detected by the vision camera.

In the inspection system, the LED light source may irradiate light to the entire surface in the width direction of the electrode at a specific angle (for example, 30 degrees), and in this instance, the LED may provide the constant intensity and wavelength of light to control to ensure the uniform characteristics of the reflected light. The vision camera may detect the reflected light that bounces off the electrode surface after it has been emitted from the LED light source, the intensity of the reflected light may be recorded in pixel units through the image sensor, and the control and analysis software may analyze the reflection characteristics of the electrode surface by the processing of data collected from the vision camera and determine the presence or absence of a defect based on the gray value difference.

Through the inspection system, a region having the gray value difference △GV of more than 20 may be identified, and when the major axis length of the horizontal cross-section of the region parallel to the electrode surface is equal to or larger than 1.5 mm, the region may be defined as the heterocolored region. In particular, the heterocolored region may extend in the length direction (machine direction (MD)) of the electrode. Because the heterocolored region of the electrode surface is formed when one or more foreign substances or agglomerates of foreign substances on or near the electrode surface are compressed in the rolling direction during the calendering or lamination process in the manufacture of the electrode, the heterocolored region extends in the length direction of the electrode.

When the gray value difference of the electrode surface is equal to or smaller than 20, it may be determined that the electrode surface is free of defects and has uniform characteristics due to no substantial gray value difference between the background and the defect. In addition, when the gray value difference is larger than 20, even a small surface defect of the electrode may be recognized, and as a result, the electrode may have poor appearance, the defective part may stick to the calender roll, and the film may be torn.

The electrode surface of the present disclosure may have 5 or less heterocolored regions per m² and according to an embodiment of the present disclosure, the electrode surface may have 0 to 5 heterocolored regions per m², or 0 to 3 heterocolored regions per m².

The electrode surface of the present disclosure having 5 or less heterocolored regions per m² may be determined to possess defect-free, very good appearance.

The heterocolored region may come from a single particle of the modified polyolefin or agglomerates of particles of the modified polyolefin. That is, the heterocolored region may be detected on the surface of the final electrode having undergone the calendering process and the lamination process on the electrode mixture powder including a single particle of the modified polyolefin or agglomerates of particles of the remaining modified polyolefin that does not sufficiently melt during the kneading process in the manufacture of the electrode.

In the present disclosure, the modified polyolefin included together with the active material, the conductive material and the fluorinated polymer has a large particle size, and the modified polyolefin with large particle size has a property of being finely dispersed as it melts and becomes flowable by heat rather than shear force after it is dispersed. The dispersion of the modified polyolefin through mixing is poor, raising a low dispersion problem.

Accordingly, in the manufacture of the electrode through mixing, kneading, grinding, calendering and lamination of the electrode materials, the modified polyolefin added first may not be evenly distributed among the other electrode materials and the modified polyolefin particles may clump together to form agglomerates, and when the average particle size of the modified polyolefin is not controlled below a predetermined size in the electrode manufacturing process, so the modified polyolefin still maintains its very large particle size in the final electrode, the electrode surface may not be smooth and may have very poor appearance such as protruding portions or recessed portions.

To improve the appearance characteristics of the electrode, the average particle size of the modified polyolefin added first may be controlled below a predetermined range, or the temperature of the manufacturing process may be increased to melt the modified polyolefin in order to improve the dispersion. In the latter case, because the modified polyolefin melts and flows at higher temperature than the melting point, as the temperature is higher, the flowability may be improved.

When controlling the average particle size of the modified polyolefin added first below the predetermined range, the modified polyolefin added first may have the average particle size of 0.5 mm or less, or from 10 µm to 0.5 mm, or from 10 µm to 450 µm, or from 10 µm to 250 µm, or from 250 µm to 450 µm.

That is, the modified polyolefin included in the electrode according to an embodiment of the present disclosure may be derived from modified polyolefin particles having the average particle size of 0.5 mm or less.

In an embodiment of the present disclosure, the amount of the modified polyolefin may range from 2 parts by weight to 40 parts by weight based on 100 parts by weight of the binder.

According to an embodiment of the present disclosure, the amount of the modified polyolefin may range from 3 parts by weight to 40 parts by weight, from 3.5 parts by weight to 40 parts by weight, or from 4 parts by weight to 40 parts by weight, or from 2 parts by weight to 33.3 parts by weight, from 2 parts by weight to 30.3 parts by weight, or from 3 parts by weight to 33.3 parts by weight, or from 3 parts by weight to 30.3 parts by weight, or from 30.3 parts by weight to 33.3 parts by weight, based on 100 parts by weight of the binder.

Additionally, a weight ratio of the modified polyolefin and the fluorinated polymer in the binder may range from 2:98 to 30:70, or from 3:97 to 40:60.

When the amount of the modified polyolefin falls within the aforementioned range, the adhesion strength between the electrode layer and the current collector may be improved, and the mechanical properties of the electrode film may be improved.

As the electrode according to an aspect of the present disclosure includes the modified polyolefin including at least one functional group of carboxylic acid anhydride-derived functional group and carboxylic acid-derived functional group, the adhesion strength to the current collector may be improved, and to avoid the influence of one or more agglomerates of the remaining modified polyolefin that does not melt during the kneading process in the manufacture of the electrode on the appearance characteristics of the electrode surface, the particle size of the modified polyolefin or the conditions of the kneading process may be controlled so that the electrode surface has 5 or less heterocolored regions per m², leading to very good appearance characteristics.

Further, when high temperature treatment is performed in the over-kneading process to improve the appearance characteristics, it may result in low mechanical strength of the electrode layer obtained in the end, causing break or fracture while in transport between rolls without a support during the electrode manufacturing process. However, the electrode according to an aspect of the present disclosure may have very good appearance characteristics of the electrode surface as well as superior mechanical properties, i.e., the breaking strength per unit width of the electrode layer (electrode film) of 0.6 N/cm or more by finely controlling the melting point of the modified polyolefin and the conditions of the kneading process.

The breaking strength per unit width of the electrode layer (electrode film) may be 0.6 N/cm or more, and according to an embodiment of the present disclosure, may range from 0.6 N/cm to 3 N/cm, or from 0.7 N/cm to 3 N/cm, or from 0.79 N/cm to 3 N/cm, or from 0.79 N/cm to 1.5 N/cm, or from 0.79 N/cm to 1.16 N/cm, or from 0.8 N/cm to 1.16 N/cm, or from 0.79 N/cm to 0.8 N/cm. When the breaking strength per unit width of the electrode layer falls within the aforementioned range, break or fracture while in transport between rolls without a support during the electrode manufacturing process may be prevented, thereby achieving roll-to-roll manufacturing.

The breaking strength per unit width of the electrode layer (electrode film) may be evaluated as follows: tailor the electrode film into 1 cm X 5 cm, pull at the speed of 5 cm/min using UTM (Zwick), measure stress and strain, and in this instance, the maximum stress immediately before break may be defined as tensile strength (kgf/cm² or MPa), and the breaking strength per unit width of the electrode layer (electrode film) may be calculated by multiplying the tensile strength by the thickness of the electrode film.

According to an embodiment of the present disclosure, the melt index (MI) of the modified polyolefin may be 50 g/10 min or less, or range from 0.5 to 50 g/10 min, or from 1 to 32 g/10 min, or from 1 to 30 g/10 min, or from 1 to 10 g/10 min, or from 10 to 32 g/10 min.

When the melt index (MI) of the modified polyolefin is equal to or less than 50 g/10 min, the modified polyolefin may have the optimal molecular weight, and the adhesion strength between the electrode layer and the current collector may be improved.

In this instance, the melt index may be also referred to as melt flow index, and is one of characteristic values indicating the rheological properties of a polymer. For example, the measured melt index may be calculated from the weight of a polymer sample that flows in 10 minutes, and the unit may be g/10 min.

According to an embodiment of the present disclosure, the melt index (MI) may be measured in accordance with ASTM D-1238 (condition E, 190°C, 2.16 kg load), or may be measured under 230°C, 2.16 kg load conditions. Specifically, the former conditions (190°C, 2.16 kg load) may be used to measure the melt index of modified polyethylene, and the latter conditions (230°C, 2.16 kg load) may be used to measure the melt index of modified polypropylene.

According to an embodiment of the present disclosure, the melting point of the modified polyolefin may be 140°C or less, or range from 70°C to 140°C, or from 73°C to 140°C, or from 70°C to 135°C, or from 70°C to 130°C, or from 73°C to 130°C, or from 73°C to 128°C, or from 73°C to 124°C, or from 124°C to 128°C.

To apply the modified polyolefin to the electrode in an embodiment of the present disclosure, it is necessary to melt the modified polyolefin and evenly disperse and mix it with the other electrode materials in the kneading step of the electrode manufacturing method as described below, so when setting the kneading temperature, it is necessary to consider the melting point of the modified polyolefin.

For example, when the kneading temperature is higher than the melting point of the modified polyolefin, the appearance of the electrode film and the adhesion strength between the film and the current collector may be improved to some extent, but when the kneading temperature is overly high, the mechanical strength of the electrode film may be reduced.

That is, when the modified polyolefin having high melting point is applied to the electrode, it is necessary to rise the kneading temperature above the melting point of the modified polyolefin to melt the modified polyolefin and evenly disperse and mix it with the other electrode materials under the kneading conditions, and in this instance, the modified polyolefin melts, but when the kneading temperature is overly high, the fluorinated polymer (for example, PTFE) may be over-fibrillated, and the polymer fibers of the fluorinated polymer may become thinner and eventually break, resulting in lower strength of the electrode film.

In contrast, when the melting point of the modified polyolefin is controlled below 140°C, the kneading temperature may be controlled below the lower temperature, for example, 170°C, 160°C or 150 °C in the kneading process, thereby preventing over-fibrillation of the fluorinated polymer and providing the electrode film having high mechanical strength.

In this instance, the melting point of the modified polyolefin may be measured using a Differential Scanning Calorimeter (DSC, name: DSC 2920, manufacturer: TA instrument). Specifically, heat the polymer to 220°C, maintain at that temperature for 5 minutes, cool to 20°C, and increase the temperature again. In this instance, each of the rate of temperature rise and the rate of temperature drop may be adjusted to 10°C/min.

According to an embodiment of the present disclosure, the amount of the active material may range from 80 to 98 parts by weight, the amount of the conductive material may range from 0.5 to 10 parts by weight, the amount of the fluorinated polymer may range from 0.5 to 5 parts by weight, and the amount of the modified polyolefin may range from 0.02 to 3.3 parts by weight.

In addition, the amount of the active material may range from 90 to 98 parts by weight, or from 90 to 96 parts by weight, the amount of the conductive material may range from 0.5 to 7 parts by weight, or 0.5 to 1 part by weight, or 1 to 7 parts by weight, and the amount of the fluorinated polymer may range from 0.5 to 4.5 parts by weight, or 0.5 to 2 parts by weight, or 2 to 4.5 parts by weight, or 0.5 to 2.3 parts by weight, or 2 to 2.3 parts by weight, or 2.3 to 4.5 parts by weight, and the amount of the modified polyolefin may range from 0.02 to 3 parts by weight, or 0.02 to 2.5 parts by weight, or 0.03 to 2 parts by weight, or 0.02 to 1 part by weight, or 1 to 3 parts by weight.

When the amounts of the active material, the conductive material, the fluorinated polymer and the modified polyolefin fall within the aforementioned ranges, it may be possible to sufficiently fibrillate the binder in the subsequent kneading process to form a mixture lump, easily manufacture the electrode film through the shaping of the mixture powder produced through the grinding process, ensure the properties of the electrode film and ensure the optimal amount of the active material, thereby preventing capacity decline and ensuring conductivity.

Meanwhile, in some cases, the filler may be added to the electrode layer to suppress the expansion of the electrode. The filler is not limited to a particular type and may include any fibrous material that does not cause any chemical change in the corresponding battery. The filler may include, for example, olefin polymers such as polyethylene or polypropylene; or fibrous materials such as glass fibers or carbon fibers.

The current collector is not limited to a particular type and may include any material having high conductivity without causing any chemical change in the battery. The current collector may include, for example, stainless steel, aluminum, nickel, titanium, calcined carbon, copper or aluminum or stainless steel treated with carbon, nickel, titanium or silver on the surface. The current collector may the microtextured surface to increase the adhesion strength of the positive electrode active material, and may come in different forms, for example, film, sheet, foil, net, porous body, foam or non-woven fabric.

As described above, because the electrode layer of the electrode of the present disclosure includes the modified polyolefin including at least one functional group of carboxylic acid anhydride-derived functional group and carboxylic acid-derived functional group, and at least one functional group of carboxylic acid anhydride-derived functional group and carboxylic acid-derived functional group of the modified polyolefin has high reactivity, the adhesion strength of the electrode layer including the modified polyolefin to the current collector is significantly improved. Accordingly, it may be possible to ensure adhesion strength and interfacial resistance characteristics between the electrode layer and the current collector without a primer layer for the current collector used in the electrode of an embodiment of the present disclosure.

The porosity of the electrode layer of the electrode may range from 20% to 50%, or from 20% to 45%, or from 20% to 40%, or 20% to 35%, or from 22% to 30%, or from 20% to 28%, or from 20% to 26%, or from 23.1% to 27.4%, or from 23.1% to 24.8%, from 23% to 26%, or from 24.8% to 27.4%. The porosity may slightly change depending on effects to which focus is given.

However, when the porosity of the electrode layer falls within the aforementioned range, this has a beneficial effect on electrolyte wetting, leading to superior life characteristics and output characteristics, and there is no need to increase the volume to achieve the same capacity, so it is advantageous in terms of energy density per volume.

The porosity of the electrode layer may be calculated by the following relation equation using the apparent density of the mixture film measured by subtracting the volume and weight of the current collector from the volume and weight of the electrode, and the actual density calculated based on the actual density and composition of each component.
$Porosity \left(%\right) = \left\{1-\left(Apparent Density/Actual Density\right)\right\} \times 100$

In an embodiment of the present disclosure, the degree of crystallinity of the binder in the electrode layer may be in a range of 10% or less.

In the present disclosure, the degree of crystallinity Xc may be measured through DSC, and is based on temperature (peak temperature) at the time of highest enthalpy in crystallization. Specifically, the degree of crystallinity is a % ratio obtained by dividing an enthalpy of fusion (△Hₘ) value actually measured by DSC by an enthalpy of fusion (△Hₘ⁰) (equilibrium heat of fusion) value of a theoretically perfect crystal (degree of crystallinity 100%) and may be calculated by the following Relation equation 1. Here, for the enthalpy of fusion value (△Hₘ⁰) of the theoretically perfect crystal, reference may be made to polymer handbook for known polymer, and in unknown or newly synthesized materials, the enthalpy of fusion value (△Hₘ⁰) of the theoretically perfect crystal may be calculated by extrapolation involving extending the degree of crystallinity beyond two points.

[Relation equation 1] $Xc \left(%\right) = \left(△{H}_{m}/△{{H}_{m}}^{0}\right) \times 100$

The electrode layer may come from a film for a dry electrode. The dry electrode film refers to a film manufactured by a dry manufacturing method that does not use a dispersion medium, as opposed to a wet electrode manufacturing method including applying a slurry to the current collector and drying the slurry, wherein the slurry is obtained by dissolving and/or dispersing the active material, the conductive material and the binder in the dispersion medium such as water or an organic solvent. Subsequently, the electrode film is laminated onto the current collector to finally manufacture the electrode. The manufacturing method of the electrode film and the electrode will be described in detail below.

According to an aspect of the present disclosure, there is provided the method for manufacturing the electrode according to an embodiment of the present disclosure, including the steps of:
preparing a mixture including active material, the conductive material and the binder, wherein the binder includes the fluorinated polymer and the modified polyolefin;
kneading the mixture at the temperature ranging from 70°C to 170°C under the pressure equal to or higher than normal pressure to produce the mixture lump;
grinding the mixture lump to obtain the electrode mixture powder;
feeding the electrode mixture powder between rolls to carry out calendering to form the electrode film; and
laminating the electrode film onto the metal current collector.

Hereinafter, the method for manufacturing the electrode according to an embodiment of the present disclosure will be described in more detail.

First, the mixture including the active material, the conductive material and the binder is prepared. The binder includes the fluorinated polymer and the modified polyolefin.

In this instance, the mixing for the preparation of the mixture may be performed for uniform distribution of the active material, the conductive material and the binder, and because they are mixed in powder form, the mixing method is not limited to a particular one and may include any method for simply mixing them. However, because the electrode of the present disclosure is manufactured by the dry manufacturing method that does not use a dispersion medium, the mixing may be performed by a dry process, and the above-described materials may be mixed in a blender.

According to an embodiment of the present disclosure, in the step of preparing the mixture including the active material, the conductive material and the binder, the modified polyolefin included in the binder may have the average particle size of 0.5 mm or less, or from 10 µm to 0.5 mm, or from 10 µm to 450 µm, or from 10 µm to 250 µm, or from 250 µm to 450 µm. When the average particle size of the modified polyolefin falls within the aforementioned range, it may be possible to improve the dispersion of the modified polyolefin with the other electrode materials when preparing the mixture.

In addition, to ensure uniformity, the mixing may be performed in a mixer at 5,000 rpm to 20,000 rpm for 30 seconds to 2 minutes, and specifically at 10,000 rpm to 15,000 rpm for 30 seconds to 1 minute.

According to an embodiment of the present disclosure, a super mixer may be used in the mixing step of preparing the mixture, and specifically, the mixing may be performed in the super mixer at 1,000 rpm to 2,000 rpm for 2 minutes to 10 minutes.

The fluorinated polymer may be microfibrillated by the step of preparing the mixture powder. The microfibrillation refers to treatment, causing the polymer to break into smaller pieces, and for example, may be performed using a mechanical shear force. Specific examples of the binder are the same as described above.

Subsequently, the mixture is kneaded at the temperature ranging from 70°C to 170°C under the pressure equal to or higher than normal pressure to produce the mixture lump.

In the known technology, high-shear mixing in a jet mill is performed to fibrillate the fluorinated polymer, but the mixing may raise the problem with micronization of the active material and breakage of the fibers. To solve these problems, the present disclosure adopts low-shear kneading rather than high-shear mixing.

The kneading is not limited to a specific method. In a specific embodiment of the present disclosure, the kneading may be, for example, performed through a kneader.

The kneading is the step in which the active material, the conductive material and the modified polyolefin are connected and held together by the fibrillation of the fluorinated polymer to form the mixture lump with the solid content of 100%. In addition, in the kneading step, it may be necessary to increase the temperature above the melting point of the modified polyolefin to melt the modified olefin in order to improve the dispersion of the materials that will be kneaded.

Specifically, the kneading may be controlled to the speed of 10 rpm to 100 rpm. For example, the kneading may be controlled to the speed of 20 rpm or more or 70 rpm or less within the aforementioned range. The kneading may be performed for 1 minute to 30 minutes.

For example, the kneading may be performed at the speed of 20 rpm to 50 rpm within the aforementioned range for 3 to 30 minutes. Meanwhile, the kneading may be controlled at a shear rate in the range of 10/s to 500/s. In a specific embodiment of the present disclosure, the kneading may be performed for 1 to 30 minutes, and the shear rate may be controlled in the range of 30/s to 100/s.

Additionally, the kneading step may be performed under the conditions of high temperature and pressure equal to or higher than normal pressure, and more specifically, pressure higher than normal pressure.

More specifically, the kneading may be performed in a range between 70°C and 170°C, and specifically between 90°C and 170°C, or between 90°C and 160°C, or between 90°C and 150°C.

At low temperature of less than 70°C outside of the aforementioned temperature range, fibrillation of the binder and agglomeration by kneading is inadequate, and a film is not easily formed during calendering. At too high temperature of more than 170°C, fibrillation of the binder occurs rapidly and subsequently the already formed fibers may be broken by too high shear force.

Additionally, the kneading may be performed under the pressure equal to or higher than normal pressure, or under the pressure of from 1 atm (atmospheric pressure) to 60 atm, or from 1 atm to 30 atm, or from 1 atm to 10 atm, or from 1 atm to 8 atm, or from 1.1 atm to 7 atm, or from 1.1 atm to 6 atm.

When the aforementioned pressure range is satisfied, it may be possible to prevent the problem with fiber breakage or overly high density of the mixture lump by the application of very high shear force and pressure. That is, according to the present disclosure, when low-shear mixing is performed under the conditions of high temperature and pressure equal to or higher than normal pressure rather than high-shear mixing, the intended effect of the present disclosure may be achieved.

In addition, according to an embodiment of the present disclosure, to improve the dispersion of the modified polyolefin, some of the active material or some of the conductive material and the modified polyolefin may be mixed and kneaded, and the result may be mixed and kneaded with the remaining electrode materials.

Subsequently, the mixture lump is ground to obtain the electrode mixture powder.

Specifically, the mixture lump produced through the kneading may be directly calendered, but in this case, the mixture lump may be pressed into a thin film shape, and it may fail to obtain the uniform film, and according to the present disclosure, the mixture lump undergoes the grinding step. That is, when the electrode mixture powder obtained by grinding is very large or clumped, bridges may be formed in the calendering process, causing defects such as pinholes, resulting in poor appearance of the film, or the film having uneven surface characteristics may be produced, and accordingly, the grinding is performed to obtain the electrode mixture powder having uniform size, and the calendering is then performed.

In this instance, the grinding step may be performed with a blender or a grinder, but is not limited thereto, and specifically, the grinding step may be performed at the speed of 5,000 rpm to 20,000 rpm for 30 seconds to 10 minutes, and specifically at the speed of 10,000 rpm to 18,000 rpm for 30 seconds to 2 minutes.

When the grinding speed and time are satisfied, sufficient grinding may be performed to form powder of an appropriate size for the formation of a film, and prevent the grinding of the mixture lump into a large amount of fine powders. If necessary, a screening process may be performed to filter out powder grains that are smaller or larger than a predetermined size.

According to an embodiment of the present disclosure, a cutter mill or a fine mill may be used in the grinding step. In this instance, the cutter mill may be used to coarsely granulate the kneaded mixture lump into a size of a few mm under the condition of 400 rpm to 500 rpm for a few seconds. In addition, the fine mill may be used to evenly grind the coarsely granulated powder below a predetermined level of size, and may be used under the condition of 3,000 to 8,000 rpm.

Subsequently, the electrode mixture powder is fed between rolls and calendered to form the electrode film.

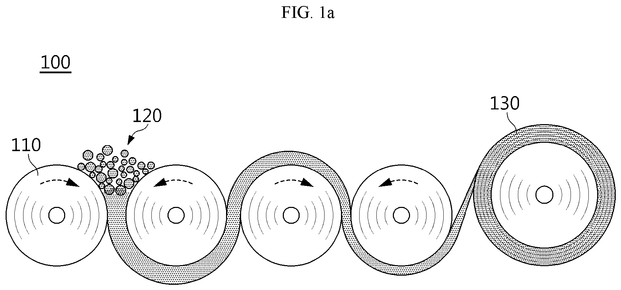

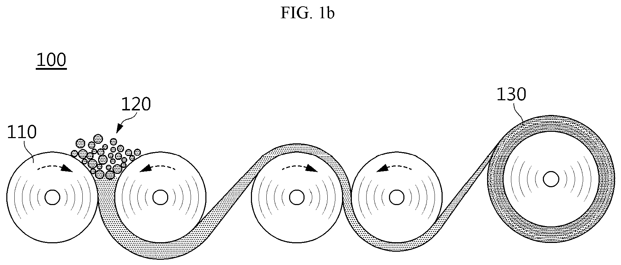

Referring to FIGS. 1a and 1b, a process 100 for forming the electrode film is as follows: feed the electrode mixture powder 120 obtained in the previous step between adjacent rolls of a plurality of rolls 110 spaced apart from each other and rotate the rolls 110 in a direction in which the rolls face each other to compact the electrode mixture powder 120 into a sheet or film shape through a powder sheeting step; followed by calendering multiple times to obtain the electrode film having a final target thickness.

According to an embodiment of the present disclosure, in the process for forming the electrode film, the gap between the rolls may be appropriately controlled in view of the dimensions or properties of the electrode film being manufactured. For example, in FIG. 1b, the gap between the second and third rolls and the gap between the fourth and fifth rolls may be larger than those of FIG. 1a.

Specifically, the calendering may be the step of shaping the electrode mixture powder into a film, for example, a film having an average thickness of 50 µm to 300 µm.

In this instance, the calendering may be, for example, performed by the rolls that face each other. According to an embodiment of the present disclosure, the calendering may be performed repeatedly one or more times, for example, 1 to 5 times, or 3 to 4 times, or 4 times.

In this instance, the roll temperature may range from 50°C to 200°C.

The rotational speed ratio of the rolls may be appropriately controlled according to the size of the rolls, the number of times of calendaring or the thickness of the electrode film, and may be, for example, controlled in a range of 1 to 10 times, or 1 to 8 times, or 1 to 7 times, or 1.2 to 5 times.

Additionally, the gap between the rolls facing each other may be variably adjusted according to the desired thickness and density of the film.

When the calendering step is completed, the dry electrode film that performs the role of the electrode mixture may be manufactured. The dry electrode film is also referred to as a free-standing film.

As the as-manufactured electrode film does not include a solvent, the electrode film has little or no flowability, making it easy to handle and shape in a desired form, and thus the electrode film may be used to manufacture electrodes of various shapes. In addition, when the electrode film of the present disclosure is used to manufacture the electrode, the drying process for removing the solvent may be omitted, thereby significantly improving the manufacturing process efficiency of the electrode and preventing the problem of the dry electrode such as cracks in the active material or breakage of the fibrillated binder.

Meanwhile, in the present disclosure, the porosity of the electrode film may range from 20% to 50%, and preferably, may be controlled below 40% or 30% within the aforementioned range. When the porosity falls within the aforementioned range, it may be possible to improve electrolyte wetting, thereby improving the life characteristics and output characteristics, and there is no need to increase the volume to achieve the same capacity, thereby improving the energy density per volume. In an embodiment of the present disclosure, the porosity may be calculated by the following equation using the measured apparent density of the dry electrode film and the actual density calculated based on the actual density and composition of each component.
$Porosity \left(%\right) = \left\{1-\left(Apparent density/Actual density\right)\right\} \times 100$

Subsequently, the electrode film is laminated onto the metal current collector.

The lamination step may be the step of compressing and attaching the electrode film obtained in the previous step onto the current collector to a predetermined thickness. The lamination may be performed by a lamination roll, and in this instance, the lamination roll may be maintained at the temperature of 25°C to 250°C.

According to an embodiment of the present disclosure, the lamination step may be continuously performed at the end of the calendering step. Specifically, when the calendering and lamination steps are continuously performed, the film may be manufactured with the porosity of less than 30% before the lamination step, and undergo the lamination process, and additional rolling may not be performed.

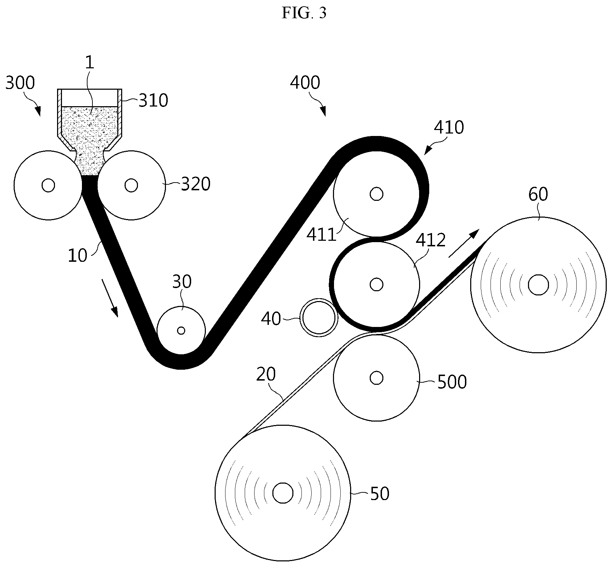

Referring to FIG. 3, the electrode mixture powder 1 obtained by grinding the mixture lump may be fed 300 through a powder feeder 310 and a feed roller 320 to form an initial sheet 10 which in turn, passes through calendering rolls 411, 412 to form the electrode film 410, and the electrode film 410 may be laminated onto the metal current collector 20 supplied from a current collector winding roll 50 and transported to a final electrode winding roll 60. In this instance, the calendering roll 412 may perform the lamination process together with the lamination roll 500.

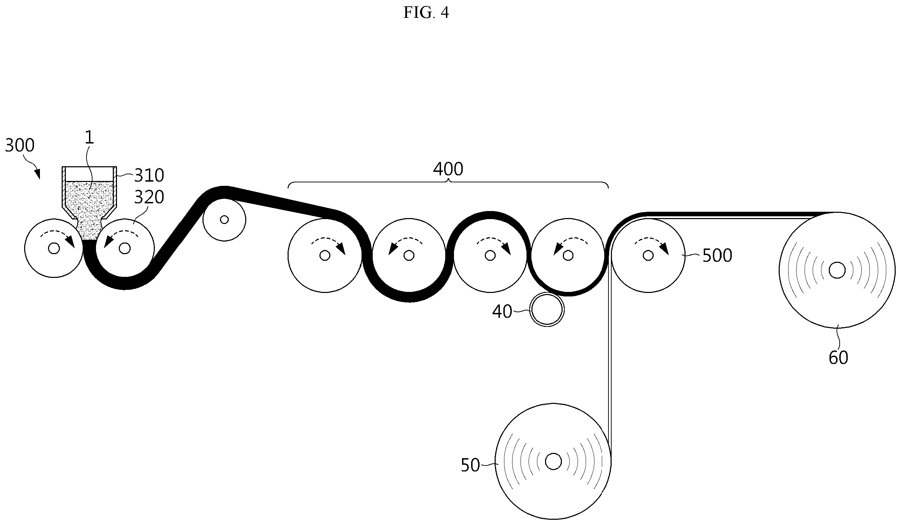

Referring to FIG. 4, the electrode mixture powder 1 obtained by grinding the mixture lump may be fed 300 through the powder feeder 310 and the feed roller 320 and pass through the calendering rolls 400 to form the electrode film, and the electrode film may be laminated onto the metal current collector supplied from the current collector winding roll 50 and transported to the final electrode winding roll 60. In this instance, among the successive calendering rolls, the last calendering roll may perform the lamination process together with the lamination roll 500.

As described above, because the electrode layer of the electrode of the present disclosure includes the modified polyolefin including at least one functional group of carboxylic acid anhydride-derived functional group and carboxylic acid-derived functional group, and at least one functional group of carboxylic acid anhydride-derived functional group and carboxylic acid-derived functional group in the modified polyolefin has high reactivity, the adhesion strength of the electrode layer including the modified polyolefin to the current collector may be significantly improved. Accordingly, the current collector used in the electrode of an embodiment of the present disclosure may be used without a primer layer.

According to an embodiment of the present disclosure, the compression ratio of the electrode film may range from 30% to 50%, or from 35% to 50%, or from 40% to 50%.

The compression ratio of the electrode film may be defined as the ratio of thickness to which the electrode film is compressed at the moment of lamination, and may be represented by the following Equation 1.

[Equation 1] $Compression ratio \left(%\right) = {T}_{p} / {T}_{1} \times 100$

In Equation 1,
Tₚ denotes the compressed thickness of the electrode film in the lamination step,
T₁ denotes the thickness of the electrode film before the lamination step.

In the present disclosure, when the compression ratio is controlled within the specific range in the lamination step, it may be possible to provide the optimal density and porosity of the electrode film and high adhesion strength between the electrode film and the current collector.

When the compression ratio of the electrode film falls within a range between 30% and 50%, the sufficient pressure applied to the electrode film may improve the adhesion strength between the electrode film and the current collector, prevent separation of the electrode film from the current collector after the lamination process, and prevent the porosity from decreasing below the target porosity or damage to the current collector due to the increased density of the electrode film more than necessary.

In an embodiment of the present disclosure, when the electrode film is laminated on two surfaces of the current collector, the compression ratio (%) of Equation 1 may be given as Equation 2 below.

[Equation 2] $30 \leq \left({T}_{1}+0.5{T}_{c}-0.5{T}_{gap}\right) / {T}_{1} \times 100 \leq 50$

In Equation 2, T₁ denotes the thickness of the electrode film before the lamination step, T_{c} denotes the thickness of the current collector, and T_{gap} denotes the gap between the first and second press rolls.

Additionally, the compaction ratio of the electrode film having undergone the lamination step may be in a range of 20% or less, or 18% or less, or 15% or less, or from 5% to 15%, or from 6% to 15%, or from 7% to 15%, or from 9% to 13%.

Here, the compaction ratio may be defined as the ratio of difference of the thickness of the electrode film before and after the lamination step to the thickness of the electrode film before the lamination step, and may be represented by Equation 3 below.

[Equation 3] $Compaction ratio \left(%\right) = \left({T}_{1}-{T}_{2}\right) / {T}_{1} \times 100$

In the above Equation 3,
T₁ denotes to the thickness of the electrode film before the lamination step,
T₂ denotes the thickness of the electrode film after the lamination step.

When the compaction ratio falls within the aforementioned range, it may be possible to ensure the optimal density and porosity of the electrode film and the adhesion strength between the electrode film and the current collector.

The apparent density increment ratio of the electrode film before and after the lamination with the current collector may be represented by Equation 4 below:

[Equation 4] $Apparent density increment ratio \left(%\right) = \left({D}_{2}-{D}_{1}\right) / {D}_{1} \times 100$
D₁ denotes the apparent density (g/cm³) of the electrode film before the lamination step,
D₂ denotes the apparent density (g/cm³) of the electrode film after the lamination step.

The apparent density increment ratio of the electrode film before and after the lamination with the current collector may range from 5% to 30%, or from 7% to 25%, or from 10% to 20%.

D₁ and D₂ indicating the apparent density of the electrode film may variously change depending on the type of the active material, and according to an embodiment of the present disclosure, when the active material includes lithium nickel-manganese-cobalt oxide Li₁₊ₓ(NiₐCo_{b}Mn_{c})₁₋ₓO₂ (x = 0 to 0.03, a = 0.3 to 0.95, b = 0.01 to 0.35, c = 0.01 to 0.5, a+b+c=1); or oxide in which parts of lithium nickel-manganese-cobalt oxide are replaced by aluminum (lithium nickel-manganese-cobalt-aluminum oxide) Liₐ[Ni_{b}Co_{c}Mn_{d}Alₑ]_{1-f} M¹_{f}O₂ (M¹ is at least one selected from the group consisting of Zr, B, W, Mg, Ce, Hf, Ta, La, Ti, Sr, Ba, F, P and S, and 0.8≤a≤1.2, 0.5≤b≤0.99, 0<c<0.5, 0<d<0.5, 0.01≤e≤0.1, 0≤f≤0.1), D₁ and D₂ may range from 2.75 g/cm³ to 3.75 g/cm³.

Meanwhile, when the apparent density increment ratio of the electrode film falls within the aforementioned range, it may be possible to improve the adhesion strength between the electrode film and the current collector, and prevent the porosity from departing from the target range or damage to the positive electrode active material or the current collector.

The apparent density of the electrode film before and after the lamination with the current collector may be calculated by measuring the weight and thickness of the electrode film before the lamination, measuring the weight and thickness of the electrode after the lamination, and subtracting the weight and thickness of the current collector to obtain the weight and thickness of the film.

In addition, the active material loading amount of the dry electrode film may range from 3 mAh/cm² to 15 mAh/cm², and specifically, from 4 mAh/cm² to 10 mAh/cm².

Here, the active material loading amount is a value calculated by Equation 5 below. [Equation 5] 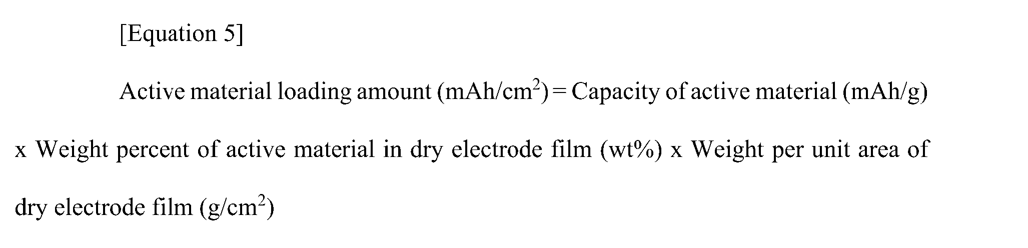 Active material loading amount (mAh/cm2)= Capacity of active material (mAh/g) x Weight percent of active material in dry electrode film (wt%) x Weight per unit area of dry electrode film (g/cm2)

In addition, the interfacial resistance (resistance before electrolyte filling, initial resistance) between the electrode film and the current collector may be in a range of 1 Ω·cm² or less, or 0.8 Ω·cm² or less, or 0.7 Ω·cm² or less, or 0.5 Ω·cm² or less, or 0.29 Ω·cm² or less, or from 0.20 to 1 Ω·cm², or from 0.20 to 0.29 Ω·cm². Here, the interfacial resistance may be calculated using a Multi Probe (MP) resistance measurement method by applying a current of 100 µA to the electrode and measuring a resistance value between the dry electrode film and the current collector as a potential difference between the probes. When the interfacial resistance falls within the aforementioned range, it may be possible to improve battery performance of a secondary battery that will be manufactured afterwards.

In addition, according to an embodiment of the present disclosure, the interfacial resistance between the electrode film and the current collector after the electrode is filled with the electrolyte solution may be in a range of 1.0 Ω·cm² or less, or 0.8 Ω·cm² or less, or 0.7 Ω·cm² or less, or from 0.3 to 1.0 Ω·cm², or from 0.32 to 1.0 Ω·cm², or from 0.32 to 0.69 Ω·cm².

In this instance, the interfacial resistance between the electrode film and the current collector after electrolyte filling may be calculated using the Multi Probe (MP) resistance measurement method by preparing a liquid electrolyte in which 1M LiPF₆ is dissolved in a solvent containing ethylene carbonate, dimethylene carbonate and diethyl carbonate mixed at 1:2:1 (volume ratio), immersing the electrode for a week, taking out the electrode, applying a current of 100 µA, and measuring a resistance value between the dry electrode film and the current collector as a potential difference measured between the probes.

According to an embodiment of the present disclosure, the adhesion strength of the electrode (initial adhesion strength, adhesion strength before electrolyte filling) may be in a range of 38 gf/2cm or more, or 50 gf/2cm or more, or from 50 gf/2cm to 500 gf/2cm, or from 150 gf/2cm to 250 gf/2cm, or from 162 gf/2cm to 212 gf/2cm.

In this instance, the adhesion strength of the electrode may be measured by attaching a double-sided tape to a slide glass, placing an electrode sample made by punching the electrode into a predetermined size (for example, 20 mm X 100 mm) on the tape, adhering the electrode sample by rolling a 2 kg roller back and forth 10 times, removing air bubbles using a laminator with the gap of 5 mm at the speed of 5 mpm, and measuring the adhesion strength as the force needed to peel off from the slide glass by pulling at 100 mm/min using UTM (TA Instruments). In this instance, the measurement angle between the slide glass and the electrode may be 90°.

According to an embodiment of the present disclosure, the adhesion strength of the electrode after electrolyte filling may be in a range of 38 gf/2cm or more, or 50 gf/2cm or more, or 150 gf/2cm or more, or from 50 gf/2cm to 500 gf/2cm, or from 150 gf/2cm to 300 gf/2cm, or from 170 gf/2cm to 250 gf/2cm, or from 174 gf/2cm to 233 gf/2cm.

In this instance, the adhesion strength of the electrode after electrolyte filling is measured by preparing a liquid electrolyte in which 1M LiPF₆ is dissolved in a solvent containing ethylene carbonate, dimethylene carbonate and diethyl carbonate mixed at 1:2:1 (volume ratio), immersing the electrode for 1 week, taking out the electrode, washing the electrode with a DMC solution, drying the electrode, placing the positive electrode sample punched into the predetermined size (for example, 20 mm X 100 mm), adhering the positive electrode sample by rolling the 2 kg roller back and forth 10 times, removing air bubbles using the laminator with the gap of 5 mm at the speed of 5 mpm, and measuring the adhesion strength as the force needed to peel off from the slide glass by pulling the positive electrode sample at 100 mm/min using UTM (TA Instruments). In this instance, the measurement angle between the slide glass and the electrode may be 90°.

When the adhesion strength of the electrode after electrolyte filling falls within the aforementioned range, it may be possible to avoid swelling in the electrode layer after the electrode is wetted with the electrolyte solution, thereby preventing delamination or bubble formation in the electrode layer, and maintaining the adhesion strength after electrolyte filling.

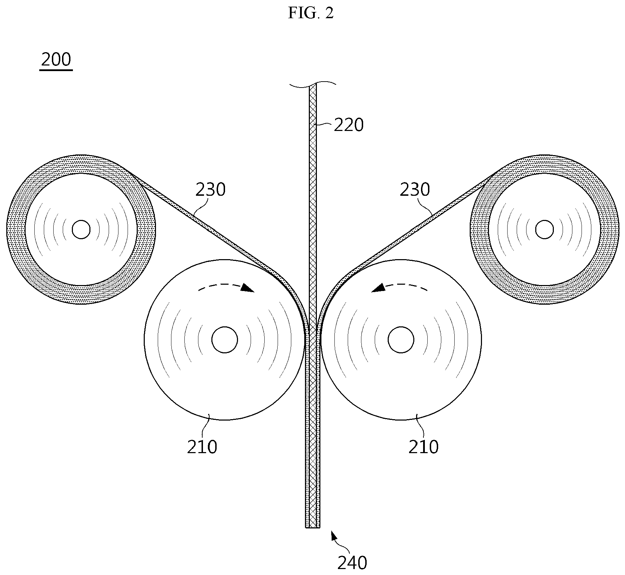

FIG. 2 is a diagram of the step of laminating the electrode film on two surfaces of the current collector according to an embodiment of the present disclosure. That is, the lamination step 200 may include compressing and attaching the electrode film 230 obtained in the previous step onto the current collector 220 to the predetermined thickness using the pair of lamination rolls 210, to finally obtain the electrode 240.

According to another embodiment of the present disclosure, there is provided an electrode manufactured by the method for manufacturing the electrode. In addition, there are provided a secondary battery including the electrode, wherein the electrode is a positive electrode, and an electrode assembly including the positive electrode, a negative electrode and a separator is housed in a battery case (a cylindrical case, a prismatic case, a pouch) together with a lithium-containing non-aqueous electrolyte, and an energy storage system including the same as a unit cell.

In this instance, the detailed structure of the secondary battery and the energy storage system is well-known in the art, and its description is omitted.

Meanwhile, according to an embodiment of the present disclosure, a dry electrode manufacturing apparatus is provided to manufacture the electrode, and includes the blender to mix the raw materials including the active material, the conductive material, and the binder comprising the fluorinated polymer and the modified polyolefin; the kneader to knead the mixture to produce the mixture lump; the grinder to grind the mixture lump to form the electrode mixture powder; the calender to form the electrode mixture powder into the dry electrode film; and the lamination roll to laminate the dry electrode film on at least one surface of the current collector.

The blender may be used to mix the raw materials, and as described above, may mix the raw materials at the speed of 5,000 rpm to 20,000 rpm. The mixer may include a super mixer.

The kneader may be used to fibrillate the binder and disperse the raw materials in the present disclosure, and the mixture may be obtained as the mixture lump through the kneading in the kneader. In this instance, the kneader for obtaining the result according to the present disclosure may be performed in a temperature range between 70°C and 170°C, or between 90°C and 170°C, or between 90°C and 160°C, or between 90°C and 150°C under the pressure equal to or higher than normal pressure, or the pressure of from 1 atm (atmospheric pressure) to 60 atm, or from 1 atm to 30 atm, or from 1 atm to 10 atm, or from 1 atm to 8 atm, or from 1.1 atm to 7 atm, or from 1.1 atm to 6 atm.

The grinder may be used to grind the mixture lump to form the electrode mixture powder, and may include a blender, a cutter mill or a fine mill.

The calender may be used to shape the electrode mixture powder into a film, and may include, for example, a pair of rollers that face each other, and the thickness of the film may be adjusted from the gap between them.

The lamination roll plays a role in attaching and compressing the dry electrode film formed by the calender to at least one surface of the current collector.

The porosity of the dry electrode film according to the present disclosure may be determined by the calender and the lamination roll.

That is, the dry electrode manufacturing apparatus according to the present disclosure is characterized by including the kneader and the grinder.

The detailed structure of the blender, the kneader, the calender and the lamination roll is well-known in the art, and its description is omitted.

Hereinafter, the present disclosure will be described in detail through examples. However, the examples according to the present disclosure may be modified in many different forms, and the scope of the present disclosure should not be interpreted as being limited to the following examples. The examples of the present disclosure are provided to describe the present disclosure to persons having ordinary skill in the art thoroughly and completely.

### Example 1

96g of lithium nickel cobalt manganese aluminum oxide (NCMA, Li[Ni_{0.88}Co_{0.07}Mn_{0.04}Al_{0.01}]O₂) as a positive electrode active material, 1g of carbon black as a conductive material, 2g of polytetrafluoroethylene (PTFE) as a binder, and 1 g of a polyethylene-based copolymer (Clariant, MA4351) (Tm 124°C, Melt Index 10 g/10 min (measured under the conditions of 190°C, 2.16 kg)) including a maleic acid anhydride-derived functional group as modified polyolefin were fed into a blender and mixed at 10,000 rpm for 1 minute to prepare a mixture, and the result was fed into a kneader. In this instance, the average particle size (D50) of the polyethylene-based copolymer including the maleic acid anhydride-derived functional group as the modified polyolefin was 250 µm.

The temperature of the kneader was stabilized at 150°C, and the mixture was fed into the pressurized kneader which in turn, operated at the speed of 40 rpm for 5 minutes under about 1.1 atm to obtain a mixture lump. The mixture lump was fed into a blender to grind at 10,000 rpm for 30 seconds, and passed through a sieve with openings of 1 mm in size to obtain an electrode mixture powder. Subsequently, the as-prepared electrode mixture powder was fed into a lab calender (roll diameter: 160 mm, roll temperature: 100°C) to produce a film and repeatedly calendered twice to finally produce an electrode film. Two sheets of electrode film were each placed on each of two surfaces of an aluminum foil (thickness: 19 µm) having no primer layer coating, and laminated through a compression roll maintained at 150°C to manufacture an electrode (positive electrode).

The total thickness of the final electrode was 171 µm, and the thickness of the active material layer on one of the two surfaces of the current collector was 76 µm.

### Example 2

96g of lithium nickel cobalt manganese aluminum oxide (NCMA, Li[Ni_{0.88}Co_{0.07}Mn_{0.04}Al_{0.01}]O₂) as a positive electrode active material, 1g of carbon black as a conductive material, 2g of polytetrafluoroethylene (PTFE) as a binder, and 1 g of a polyethylene-based copolymer (Woosung Chemical, SP1750) (Tm 128°C, Melt Index 3 g/10 min (measured under the conditions of 190°C, 2.16 kg)) including a maleic acid anhydride-derived functional group as modified polyolefin were fed into a blender and mixed at 10,000 rpm for 1 minute to prepare a mixture, and the result was fed into a kneader. In this instance, the average particle size (D50) of the polyethylene-based copolymer including the maleic acid anhydride-derived functional group as the modified polyolefin used was 500 µm (the initial average particle size of 2 mm was controlled to 450 µm using a grinder).

The temperature of the kneader was stabilized at 150°C, and the mixture was fed into the pressurized kneader which in turn, operated at the speed of 40 rpm for 5 minutes under about 1.1 atm to obtain a mixture lump. The mixture lump was fed into a blender to grind at 10,000 rpm for 30 seconds, and passed through a sieve with openings of 1 mm in size to obtain an electrode mixture powder. Subsequently, the as-prepared electrode mixture powder was fed into a lab calender (roll diameter: 160 mm, roll temperature: 100°C) to produce a film and repeatedly calendered twice to finally produce an electrode film. Two sheets of electrode film were each placed on each of two surfaces of aluminum foil (thickness: 19 µm) having no primer layer coating, and laminated through a compression roll maintained at 150°C to manufacture an electrode (positive electrode).

The total thickness of the final electrode was 173 µm, and the thickness of the active material layer on one of the two surfaces of the current collector was 77 µm.

### Example 3

An electrode film and an electrode (positive electrode) were manufactured by the same method as Example 1, except that 95.7g of lithium nickel cobalt manganese aluminum oxide (NCMA, Li[Ni_{0.88}Co_{0.07}Mn_{0.04}Al_{0.01}]O₂) as a positive electrode active material, 1g of carbon black as a conductive material, 2.3g of polytetrafluoroethylene (PTFE) as a binder, and 1g of a polyethylene-based copolymer including a maleic acid anhydride-derived functional group (Clariant, Celldust 8020) (Tm 73°C, Melt Index 32 g/10 min (measured under the conditions of 190°C, 2.16 kg)) as modified polyolefin were fed into a blender and mixed at 10,000 rpm for 1 minute to prepare a mixture, and the result was fed into a kneader. In this instance, the average particle size (D50) of the polyethylene-based copolymer including the maleic acid anhydride-derived functional group as the modified polyolefin used was 10 µm.

The total thickness of the final electrode was 173 µm, and the thickness of the active material layer on one of the two surfaces of the current collector was 77 µm.

### Comparative Example 1

An electrode was manufactured by the same method as Example 1, except that 95.7g of lithium nickel cobalt manganese aluminum oxide (NCMA, Li[Ni_{0.88}Co_{0.07}Mn_{0.04}Al_{0.01}]O₂) as a positive electrode active material, 1g of carbon black as a conductive material, 2.3g of polytetrafluoroethylene (PTFE) as a binder, and 1g of a polypropylene-based copolymer (Woosung Chemical, SP3789) (Tm 165°C, Melt Index 3 g/10 min (measured under the conditions of 230°C, 2.16 kg)) including a maleic acid anhydride-derived functional group as modified polyolefin were fed into a blender and mixed at 10,000 rpm for 1 minute to prepare a mixture. In this instance, the average particle size (D50) of the polypropylene-based copolymer including the maleic acid anhydride-derived functional group as the modified polyolefin used was 450 µm.

The temperature of a kneader was stabilized at 150°C, and the mixture was fed into the pressurized kneader which in turn, operated at the speed of 40 rpm for 5 minutes under about 1.1 atm to obtain a mixture lump. The mixture lump was fed into a blender to grind at 10,000 rpm for 30 seconds, and passed through a sieve with openings of 1 mm in size to obtain an electrode mixture powder. Subsequently, the as-prepared electrode mixture powder was fed into a lab calender (roll diameter: 160 mm, roll temperature: 100°C) to produce a film, and repeatedly calendered twice to finally produce an electrode film. Two sheets of electrode film were each placed on each of two surfaces of an aluminum foil (thickness: 19 µm) having no primer layer coating, and laminated through a compression roll maintained at 150 °C to manufacture an electrode (positive electrode).

The total thickness of the final electrode was 173 µm, and the thickness of the active material layer on one of the two surfaces of the current collector was 77 µm.

### Comparative Example 2

95.7g of lithium nickel cobalt manganese aluminum oxide (NCMA, Li[Ni_{0.88}Co_{0.07}Mn_{0.04}Al_{0.01}]O₂) as a positive electrode active material, 1g of carbon black as a conductive material, 2.3g of polytetrafluoroethylene (PTFE) as a binder, and 1g of a polypropylene-based copolymer (Woosung Chemical, SP3789) (Tm 165°C, Melt Index 3 g/10 min (measured under the conditions of 230°C, 2.16 kg)) including a maleic acid anhydride-derived functional group as modified polyolefin were fed into a blender and mixed at 10,000 rpm for 1 minute to prepare a mixture, and the result was fed into a kneader. In this instance, the average particle size (D50) of the polypropylene-based copolymer including the maleic acid anhydride-derived functional group as the modified polyolefin was 450 µm.

The temperature of the kneader was stabilized at 180°C, and the mixture was fed into the pressurized kneader which in turn, operated at the speed of 40 rpm for 10 minutes under about 1.1 atm to obtain a mixture lump. The mixture lump was fed into a blender to grind at 10,000 rpm for 30 seconds, and passed through a sieve with openings of 1 mm in size to obtain an electrode mixture powder. Subsequently, the as-prepared electrode mixture powder was fed into a lab calender (roll diameter: 160 mm, roll temperature: 100°C) to produce a film, and repeatedly calendered twice to finally produce an electrode film. Two sheets of electrode film were each placed on each of two surfaces of an aluminum foil (thickness: 19 µm) having no primer layer coating, and laminated through a compression roll maintained at 150°C to manufacture an electrode (positive electrode).

The total thickness of the final electrode was 175 µm, and the thickness of the active material layer on one of the two surfaces of the current collector was 78 µm.

### Comparative Example 3

An electrode was manufactured by the same method as Example 1, except that the temperature of the kneader was controlled to 180°C.

The total thickness of the final electrode was 171 µm, and the thickness of the active material layer on one of the two surfaces of the current collector was 76 µm.

### Evaluation of melting point of modified polyolefin

The melting point of the modified polyolefin used in each of Examples 1 to 3 and Comparative Examples 1 to 3 was measured using a differential scanning calorimeter (DSC, name: DSC 2920, manufacturer: TA instrument). Specifically, the modified polyolefin sample was fed into the differential scanning calorimeter, heated to 220°C, maintained at the temperature for 5 minutes, cooled to 20°C and increased again in temperature, and in this instance, each of the rate of temperature rise and the rate of temperature drop was adjusted to 10°C/min.

### Evaluation of performance

The following evaluation was performed on the positive electrode manufactured in each of Examples 1 to 3 and Comparative Examples 1 to 3, and TABLE 1 summaries the results below.

### Evaluation of initial adhesion strength (adhesion strength before electrolyte filling)

A double-sided tape was attached to a slide glass, and a positive electrode sample made by punching the electrode of each of Examples 1 to 3 and Comparative Examples 1 to 3 into 20 mm X 100 mm was placed on the tape, and adhered by rolling a 2 kg roller back and forth 10 times, followed by air bubble removal using a laminator with the gap of 5 mm at the speed of 5 mpm, and the adhesion strength was measured as the force needed to peel off from the slide glass by pulling at 100 mm/min using UTM (TA Instruments). In this instance, the measurement angle between the slide glass and the electrode was 90°.

### Adhesion strength after electrolyte filling

A liquid electrolyte was prepared in which 1M LiPF₆ is dissolved in a solvent containing ethylene carbonate, dimethylene carbonate and diethyl carbonate mixed at 1:2:1 (volume ratio), and the positive electrode manufactured in each of Examples 1 to 3 and Comparative Examples 1 to 3 was immersed for 1 week. After electrolyte filling, the positive electrode was taken out, washed with a DMC solution, dried, and punched into 20 mm X 100 mm to make a positive electrode sample, the positive electrode sample was placed and adhered by rolling the 2 kg roller back and forth 10 times, followed by air bubble removal using the laminator with the gap of 5 mm at the speed of 5 mpm, and the adhesion strength after electrolyte filling was measured as the force needed to peel off from the slide glass by pulling at 100 mm/min using UTM (TA Instruments). In this instance, the measurement angle between the slide glass and the electrode was 90°.

### Initial interface resistance (resistance before electrolyte filling)

The interfacial resistance was calculated using a Multi Probe (MP) resistance measurement method by applying a current of 100 µA to the positive electrode manufactured in each of Examples 1 to 3 and Comparative Examples 1 to 3 and measuring a resistance value between the dry electrode film and the current collector based on a potential difference measured between the probes.

### Interfacial resistance after electrolyte filling

The liquid electrolyte was prepared in which 1M LiPF₆ was dissolved in the solvent containing ethylene carbonate, dimethylene carbonate and diethyl carbonate at 1:2:1 (volume ratio), and the positive electrode manufactured in each of Examples 1 to 3 and Comparative Examples 1 to 3 were immersed for 1 week. After electrolyte filling, the positive electrode was taken out, and the interfacial resistance was calculated using a Multi Probe (MP) resistance measurement method by applying the current of 100 µA to the positive electrode and measuring a resistance value between the dry electrode film and the current collector as a potential difference between the probes.

### Evaluation of breaking strength per unit width of electrode layer (electrode film)

The positive electrode film (electrode film) manufactured in each of Examples 1 to 3 and Comparative Examples 1 to 3 was tailored into 1 cm X 5 cm to prepare samples, and stress and strain were measured by pulling at the speed of 5 cm/min using UTM (Zwick), and in this instance, the maximum stress immediately before break was defined as tensile strength (kgf/cm², or MPa), and the breaking strength per unit width of the electrode layer (electrode film) was calculated by multiply the tensile strength by the thickness of the electrode film.

### Evaluation of appearance

### (1) Number of heterocolored regions

The number of heterocolored regions per unit area (square meter) on the surface of the electrode was evaluated as follows:
Using a vision camera inspection system (Inteck Plus), emit light from an LED light source at 30° over the entire surface in the width direction of the electrode, the vision camera detects the reflected light that bounces off the electrode surface after it has been emitted from the LED light source, record the intensity of the reflected light in pixel units through an image sensor, analyze the reflection characteristics of the electrode surface by the processing of data collected from the vision camera, identify an area having a gray value difference △GV of more than 20 compared to the background, and determine the corresponding area as a heteroclored region when the major axis length of the horizontal cross section of the corresponding area is 1.5 mm or more.

The gray value difference △GV was defined by Equation below.
$Gray value difference △ GV = \left|Background GV-Heterocolored region GV\right|$

In this instance, the criteria for good and bad electrode appearance are as follows.
Good: Number of heterocolored regions is equal to or less than 5 per m²
Bad: Number of heterocolored regions is equal to or larger than 6 per m²

### (2) Observation of appearance

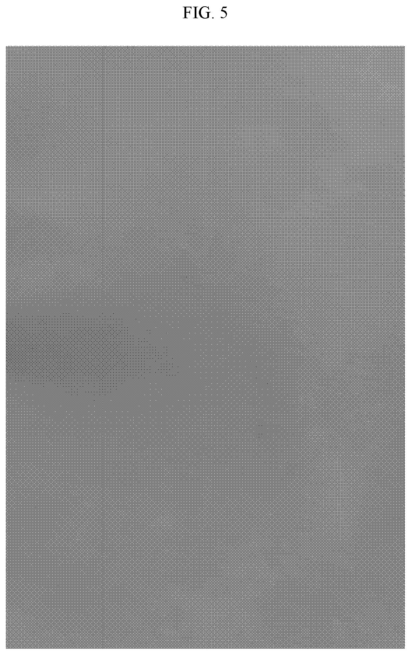

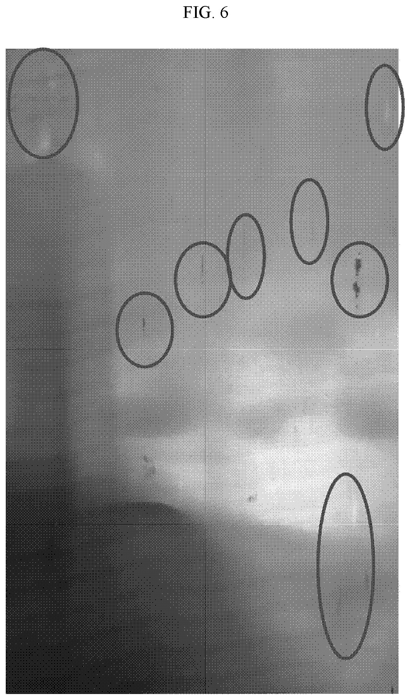

FIGS. 5 and 6 show photographic images of the observed surfaces of the positive electrodes manufactured in Example 1 and Comparative Example 1, respectively.

Referring to FIGS. 5 and 6, the positive electrode surface of Example 1 had very good appearance (FIG. 5), but in the case of the positive electrode of Comparative Example 1, many defects were observed on the surface (FIG. 6).

**[TABLE 1]**

| | Adhesion strength (gf/2cm) | Adhesion strength after electrolyte filling (gf/2cm) | Initial interface resistance (Ω·cm²) | Interfacial resistance after electrolyte filling (Ω·cm²) | appearance (Number of heterocolored regions on electrode surface (number/m²) | Breaking strength per unit width (N/cm) |
|---|---|---|---|---|---|---|
| Example 1 | 195 | 202 | 0.21 | 0.42 | Good (0) | 0.79 |
| Example 2 | 184 | 196 | 0.23 | 0.51 | Good (3) | 0.80 |
| Example 3 | 190 | 198 | 0.19 | 0.40 | Good (0) | 1.16 |
| Comparative Example 1 | 125 | 130 | 0.25 | 0.55 | Bad (50 or more, bunches) | 1.05 |
| Comparative Example 2 | 75 | 84 | 0.29 | 0.59 | Bad (7) | 0.52(NG) |
| Comparative Example 3 | 175 | 184 | 0.22 | 0.46 | Good (0) | 0.38(NG) |

Referring to TABLE 1, compared to the electrodes of Comparative Examples 1 and 3, it was confirmed that the electrodes manufactured in Examples 1 to 3 including the modified polyethylene had a very small number of heterocolored regions on the electrode surface, and high uniformity of the electrode surface, thereby remarkably improving the appearance characteristics, and besides, they had the breaking strength per unit width of 0.6 N/cm or more, thereby allowing for the roll-to-roll process without break, and improving the adhesion strength before and after electrolyte filling. In contrast, the electrode of Comparative Example 1 had satisfactory breaking strength, but very poor appearance characteristics, and Comparative Examples 2 and 3 showed very inferior outcomes in breaking strength and appearance characteristics of the electrode.

## Claims

1. An electrode comprising:
an electrode current collector; and an electrode layer present on the electrode current collector and including an active material, a conductive material and a binder,
wherein the binder includes a fluorinated polymer and a modified polyolefin,
wherein the electrode has 5 or less heterocolored regions per m² on a surface,
wherein the modified polyolefin includes at least one functional group of a carboxylic acid anhydride-derived functional group and a carboxylic acid-derived functional group, and
wherein a breaking strength per unit width of the electrode layer is 0.6 N/cm or more.

2. The electrode according to claim 1,
wherein the electrode has 0 to 3 heterocolored regions per m² on the surface.

3. The electrode according to claim 1,
wherein the breaking strength per unit width of the electrode layer ranges from 0.6 N/cm to 3 N/cm.

4. The electrode according to claim 1,
wherein the modified polyolefin is derived from modified polyolefin particles having an average particle size of 0.5 mm or less.

5. The electrode according to claim 1,
wherein an amount of the modified polyolefin ranges from 2 parts by weight to 40 parts by weight based on 100 parts by weight of the binder.

6. The electrode according to claim 1,
wherein a melting point of the modified polyolefin is 140°C or less.

7. The electrode according to claim 1,
wherein the modified polyolefin includes at least one of a modified polyethylene and a modified polypropylene.

8. The electrode according to claim 1,
wherein the olefin of the modified polyolefin includes at least one of an ethylene and a propylene, and
wherein the at least one functional group of the carboxylic acid anhydride-derived functional group and the carboxylic acid-derived functional group is derived from maleic acid anhydride, glutaric acid anhydride, phthalic acid anhydride, trimellitic acid anhydride, pyromellitic acid monoanhydride, pyromellitic acid dianhydride, 1,8-naphthalenedicarboxylic acid anhydride, 2,3-naphthalenedicarboxylic acid anhydride, 1,4,5,8-naphthalenetetracarboxylic acid monoanhydride, 1,4,5,8-naphthalenetetracarboxylic acid dianhydride, 2,3,6,7-naphthalenetetracarboxylic acid monoanhydride, 2,3,6,7-naphthalenetetracarboxylic acid dianhydride, maleic acid, glutaric acid, phthalic acid, trimellitic acid, pyromellitic acid, 1,8-naphthalenedicarboxylic acid, 2,3-naphthalenedicarboxylic acid, 1,4,5,8-naphthalenetetracarboxylic acid, 2,3,6,7-naphthalenetetracarboxylic acid, or two or more of them.

9. The electrode according to claim 1,
wherein the modified polyolefin is a modified polyethylene.

10. The electrode according to claim 1,
wherein the modified polyolefin is at least one of a polyethylene including the maleic acid anhydride-derived functional group and a polypropylene including the maleic acid anhydride-derived functional group.

11. The electrode according to claim 1,
wherein an amount of the at least one functional group of the carboxylic acid anhydride-derived functional group and the carboxylic acid-derived functional group in the modified polyolefin ranges from 0.5 mol% to 20 mol%.

12. The electrode according to claim 1,
wherein the binder is fibrillated to bind the active material and the conductive material.

13. The electrode according to claim 1,
wherein the binder includes a polytetrafluoroethylene PTFE.

14. The electrode according to claim 1,
wherein an amount of the active material ranges from 80 parts by weight to 98 parts by weight, an amount of the conductive material ranges from 0.5 parts by weight to 10 parts by weight, an amount of the fluorinated polymer ranges from 0.5 parts by weight to 5 parts by weight, and an amount of the modified polyolefin ranges from 0.02 parts by weight to 3.3 parts by weight.

15. The electrode according to claim 1,
wherein the electrode current collector does not include a conductive primer layer on at least one surface.

16. The electrode according to claim 1,
wherein the electrode layer is derived from a dry electrode film.

17. A method for manufacturing the electrode of claim 1, the method comprising:
preparing a mixture including an active material, a conductive material and a binder, wherein the binder includes a fluorinated polymer and a modified polyolefin;
kneading the mixture in a range between 70°C and 170°C under higher pressure than normal pressure to produce a mixture lump;
grinding the mixture lump to obtain an electrode mixture powder;
feeding the electrode mixture powder between a plurality of rolls to perform calendering to form an electrode film; and
laminating the electrode film onto a metal current collector.

18. The method for manufacturing the electrode according to claim 17,
wherein the modified polyolefin has an average particle size of 0.5 mm or less.

19. The method for manufacturing the electrode according to claim 17,
wherein the step of kneading to produce the mixture lump is performed in a kneader under the higher pressure than the normal pressure.

20. A secondary battery comprising:
a positive electrode, a negative electrode and a separator present between the positive electrode and the negative electrode,
wherein at least one of the positive electrode and the negative electrode is the electrode according to any one of claims 1 to 16.

21. An energy storage system comprising the secondary battery according to claim 20 as a unit cell.
